(19) Europäisches Patentamt
European Patent Office
Office européen des brevets

(11) Publication number : **0 403 030 B1**

(12) **EUROPEAN PATENT SPECIFICATION**

(45) Date of publication of patent specification : **05.01.94 Bulletin 94/01**

(51) Int. Cl.$^5$ : **A23C 19/16,** A23P 1/08

(21) Application number : **90201723.5**

(22) Date of filing : **28.06.90**

(54) **Method for the preparation of a coating preparation for cheese, a coating preparation obtainable in this way and a method for coating cheese using a preparation of this type.**

(30) Priority : **13.07.89 NL 8901816**

(43) Date of publication of application : **19.12.90 Bulletin 90/51**

(45) Publication of the grant of the patent : **05.01.94 Bulletin 94/01**

(84) Designated Contracting States : **AT BE CH DE DK ES FR GB GR IT LI NL SE**

(56) References cited :
**EP-A- 0 037 086**
**EP-A- 0 141 299**
**DE-A- 2 411 058**
**FR-A- 643 128**
**FR-A- 1 172 719**
**FR-A- 1 453 977**
**DGF, Einheitsmethoden-Abteilung M-Wachse, M-11(75), pages 1-3**

(73) Proprietor : **PARAMELT SYNTAC B.V.
Costerstraat 18
NL-1704 RJ Heerhugowaard (NL)**

(72) Inventor : **Woldhuis, Jan
Marga Klompéstraat 16
NL-1827 MF Alkmaar (NL)**
Inventor : **Eykenboom, Antonius Caspar
Bergkristal 14
NL-1703 EC Heerhugowaard (NL)**
Inventor : **Ubert, Jan Dirk
Saffier 23
NL-1703 BV Heerhugowaard (NL)**

(74) Representative : **de Bruijn, Leendert C. et al
Nederlandsch Octrooibureau
Scheveningseweg 82 P.O. Box 29720
NL-2502 LS Den Haag (NL)**

**EP 0 403 030 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a method coating cheese using a coating preparation comprising a mixture of a glyceride of a saturated fatty acid (A) with a wax or a wax-like component (B) and, if appropriate, with further conventional components.

A method of this type is known from French Patent Specification 1,453,977. This specification refers to a mixture of microcrystalline, i.e. mineral, waxes, polyethene waxes and acetoglycerides. No examples are given of the constituents used, the parameters for these and the quantities used. However, it is stated that the coating preparation used displays advantageous characteristics on cutting the coated product (cheese).

The use of acetylated monoglycerides as coating agents for foodstuffs, including cheese, is known, for example, from the publication Food Processing of December 1960 and from Food Technology, part 21, November 1967, page 1462 et seq.

The use of acetoglycerides as the first layer on fatty and, in particular, angular types of cheese is described in European Patent Application 0,141,299. These acetoglycerides have a highly plastic structure and give a good flow distribution over fatty and wet cheese surfaces. The highly plastic structure prevents lifting of the cheese with the aid of suction cups, which hinders a normal mechanical treatment. A cheese wax based on organic hydrocarbons is applied as the second layer. This is necessary because a coating of acetoglycerides only does not prevent, or inadequately prevents, drying-out of the cheese, which is one of the most important functions of cheese coating. Moreover, with this known method an undesired mixing with the second layer takes place because of the low melting point of the first layer.

German Offenlegungsschrift 2,411,058 relates to a coating composition for the preservation of meat products, which preparation contains 60-80 % of acetylated monoglycerides, 5-20 % of plastic materials having a high melting point and a low viscosity and 0-20 % of fat having a melting point of 45-60°C. Consequently, the use of fat is not obligatory. According to the only example present an amount of 6 % of palm fat having a melting point of 44-46°C is used. The viscosity and solidification time of the coating makes it unacceptable for the coating of cheese.

US Patent Specification 3,388,085 discloses a coating for cheese which consists of a mixture of 45-60 parts by weight of ethene/vinyl acetate copolymer and 55-40 parts by weight of an essentially acetylated monoglyceride of fatty acids containing 14-22 carbon atoms, which is usually fluid. These coating preparations possess advantageous characteristics with regard to strength, permeability, colour, odour, stability and peelability. The high viscosity (very long drip and solidification time) of these known coating preparations makes it impossible to use them on cheese in practice.

European Patent Application 0,037,086 discloses preparations for preparing coatings on meat products, which preparations contain acetylated monoglycerides, synthetic waxes from the group of paraffin waxes and, if appropriate, microcrystalline waxes, cellulose esters and pigments. These coating preparations are typically suitable for meat products such as sausage, bacon and ham. The compounds concerned in these preparations are again mineral hydrocarbon waxes. Moreover, the preparations are too viscous for use on cheese.

A suitable coating for cheese must satisfy a number of conditions. These conditions can be summarized as follows:

| PARAMETER | LIMITS | PREFERRED RANGE |
|---|---|---|
| Melting point (Mettler drop point) | 60-90°C | 60-75°C |
| Penetration 25°C (ASTM D-1321) | 30-100 dmm | 30-55 dmm |
| Viscosity 100°C (Brookfield) | 4-40 mPa.s | 5-20 mPa.s |
| Tensile strength 23°C (100 mm/min) | 0.1-2.0 MPa | 0.2-1.2 MPa |
| Deformation at break 23°C (100 mm/min) | 0-200 % | 15-120 % |
| Solidification time | 1-20 sec. | 1-6 sec. |

The methods for determining the abovementioned parameters are explained in more detail below.

According to the invention, coating preparations for cheese have been developed which satisfy the requirements with regard to the combination of the desired parameters, indicated above, and which are free from mineral hydrocarbon waxes.

The invention therefore relates to a method of the type mentioned in the preamble, which is characterized in that at least one constituent chosen from the glyceride of a saturated fatty acid is chosen from group A:

A wax-like fatty acid glyceryl esters which are solid at room temperature, of the formula

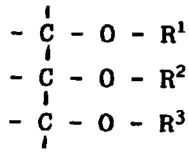

wherein one or two of the groups $R^1$, $R^2$ and $R^3$ are radicals of aliphatic carboxylic acids having 1-6 carbon atoms,

and the other group(s) $R^1$, $R^2$ and/or $R^3$ is(are) a radical(s) of aliphatic saturated carboxylic acids having 14-22 carbon atoms;

and that the wax or wax-like component is chosen from group B:

B natural, i.e. vegetable and animal, waxes, synthetic ester waxes, fats, fatty acids, which may or may not be hydrogenated, which waxes or wax-like materials are not of mineral origin and have the following characteristics:

| | |
|---|---|
| melting point (Mettler drop point): | 60-110°C |
| penetration 25°C (ASTM D1321): | 0-30 |
| viscosity 100°C (Brookfield): | 5-20 mPa.s |

the melting point of the constituent from group B being higher than that of the constituent from group A.

It is extremely surprising to note that the preparations which are obtainable according to the invention provide coatings which constitute an effective barrier against water vapour. Specifically it has been found, against expectations, that cheeses coated with a preparation based on the abovementioned constituents A and B show a small weight loss as a result of drying out in the course of time. This small weight loss is of the order of magnitude of the weight loss which occurs with a conventional cheese wax based on mineral hydrocarbon waxes. It is pointed out that in the course of, for example, 10 weeks after coating, the weight loss as a result of drying-out of cheese coated with acetylated monoglyceride only is many times that of cheese coated with a conventional cheese wax. Despite the polar nature of the coating according to the invention, drying-out is unexpectedly slight.

Preferably, the amount of the constituent from group A makes up 95-5 % by weight and the amount of the constituent from group B makes up 5-95 % by weight, based on the weight of the total composition.

In general, acetylated monoglycerides/diglycerides of edible oils and fats, preferably with a degree of acetylation of 0.5-0.7, can be used as the constituent from group A. These materials are also termed acetoglycerides (for example Admul 2021, trademark) or the acetic acid esters of monoglycerides/diglycerides of saturated fatty acids.

Apart from the acetic acid ester, the lactic acid and citric acid esters of monoglycerides and diglycerides of palmitic acid and stearic acid can also be used as constituents from group B.

With regard to the constituent from group B, which is preferably used, it can be stated in general that this is preferably a wax of vegetable origin. In particular, mono- and diglycerides of vegetable and animal fatty acids may be mentioned.

At all events the melting point of the constituent from group B is higher than that of the constituent from group A.

An example of a suitable wax is hydrogenated castor oil. Apart from the fatty acid esters of glycerol, the esters of 4-, 5- and 6-hydric alcohols can also be used. A characteristic of these substances is their low viscosity at temperatures which are slightly above the melting point thereof.

The waxes which can be used in the method according to the present invention can be taken from the definition of waxes drawn up by the "Deutsche Gesellschaft für Fettwissenschaft", (see DgF - Einheitsmethoden - Abteilung M - Wachse, M-11 (75), pages 1-3) insofar as these are not mineral hydrocarbons.

The constituents from group B serve to make the basic material from group A usable: this latter material must be hardened, acquire a rigid structure and also acquire a higher solidification point and a shorter solidification time. Moreover, for adjustment to the correct structure, it can be desirable to add natural oils or liquid acetoglycerides.

In order to improve the structure and to obtain a better cohesion and a smoother surface and in order to adjust the viscosity it is also possible to add polymer materials, for example plastics, such as polyalkenes, copolymers of ethene and propene and/or butene, copolymers of ethene with the vinyl esters of monobasic saturated carboxylic acids having 1-18 carbon atoms, copolymers of ethene with acrylic acid esters of monohydric saturated alcohols having 1-8 carbon atoms, varieties of rubber insofar as these are miscible, cellulose derivatives such as cellulose esters and cellulose ethers, and also polyvinyl ethers.

The conventional additives, such as dyes and pigments, can be added to the coating mixture which is prepared according to the invention.

It is self-evident that all materials to be used in the method according to the invention must be physiologically acceptable.

The invention also relates to coating preparations which are obtainable by the method described above and to thus coated cheese.

The invention also relates to a method for coating cheese, in which a coating preparation obtainable according to the present invention is used.

Coating preparations and the relevant parameters thereof are given in tables A-D below. These parameters are determined by standard procedures, i.e.

Melting point:

determined as drop point using the Mettler FP5 automated drop point apparatus. Heating rate 1°C/min.

Penetration: ASTM D1321

Viscosity: ASTM D2669

Tensile strength and deformation at break:

Test rods of the waxes to be tested are cast at 100°C with a length of 5 cm and a rectangular cross-section of 2 $cm^2$. Circular clamping pieces are cast onto both ends of the test rods.

After heat treatment at 23°C for 24 h, these test rods are clamped on an electronic tensile strength tester and stretched at a rate of 100 mm/min. The tensile strength is the maximum recorded force per $cm^2$ and the deformation at break is given as the increase in length in per cent of the original test rod (5 cm).

Solidification time:

A 250 ml round-bottomed flask filled with paraffin oil and brought to 20°C is immersed for 5 sec in molten wax at 100°C. The solidification time is determined as the time in seconds which elapses between removing the round-bottomed flask from the wax bath and the time when a visible finger print is no longer left behind when the solidifying wax layer is touched at a point 45° from the bottom point of the round-bottomed flask.

TABLE A

| | 1 | 2 | 3 | 4 | 5 | 6 | 7 | 8 | 9 |
|---|---|---|---|---|---|---|---|---|---|
| acetylated monoglycerides/diglycerides of edible oils/fats with a degree of acetylation of 0.5-0.7 (Radiamuls AMG 2021®) | 100 | 60 | 80 | 80 | 80 | 80 | 70 | 60 | 70 |
| lactic acid ester of monoglycerides/diglycerides of edible oils/fats (Admul 2033 ®) | | 40 | | | | | | | |
| sorbitan tristearate | | | 20 | | | | | | |
| pentaerythritol tetrastearate | | | | 20 | | | | | |
| monoglycerides/diglycerides of animal fatty acids (Radiamuls MG 2600 ®) | | | | | 20 | | | | |
| monoglycerides/diglycerides of vegetable fatty acids (Radiamuls MG 2603 ®) | | | | | | 20 | | | |
| stearyl stearate | | | | | | | 30 | | |
| glyceryl monostearate | | | | | | | | 40 | |
| stearic acid | | | | | | | | | 30 |
| melting point (Mettler drop point), °C | 35-50 | 42.3 | 42.2 | 44.1 | 44.9 | 46.5 | 49.3 | 48.8 | 50.0 |
| penetration 25°C (ASTM D-1321) 0.1 mm | 89-95 | 40 | 37 | 35 | 54 | 51 | 47 | 40 | 44 |
| viscosity 100°C (Brookfield), mPa.s | 5.0 | 7.5 | 6.0 | 6.0 | 5.8 | 5.7 | 5.0 | 7.0 | 5.0 |
| tensile strength (100 mm/min), mPa | 0.20 | 0.75 | 0.55 | 0.60 | 0.55 | 0.58 | 0.35 | 0.6 | 0.4 |
| deformation at break (100 mm/min.) % | 50 | 45 | 5 | 140 | 160 | 120 | 2 | 5 | 150 |
| solidification time, sec. | 15-20 | 9.5 | 9.0 | 8.0 | 8.5 | 8.0 | 8.0 | 8.0 | 7.5 |

TABLE B

| | 10 | 11 | 12 | 13 | 14 |
|---|---|---|---|---|---|
| acetylated monoglycerides/diglycerides of edible oils/fats with a degree of acetylation of 0.5-0.7 (Radiamuls AMG 2021®) | 70 | 50 | 85 | 85 | 85 |
| beeswax (wax produced by the insect species "Apis", e.g. the honeybee ("Apis mellifica") | 30 | | | | |
| hardened vegetable fat (Prifat 9834) | | 50 | | | |
| carnauba wax (wax from the leaves of the South American palm "Copernicia cerifera") | | | 15 | | |
| hardened castor oil (Opalwax ®) | | | | 15 | |
| ethylene glycol ester of montan acid (Hoechstwachs E ®) | | | | | 15 |
| melting point (Mettler drop point), °C | 57.4 | 62.7 | 72.0 | 74.0 | 74.3 |
| penetration 25°C (ASTM D-1321) 0.1 mm | 50 | 25 | 40 | 42 | 38 |
| viscosity 100°C (Brookfield), mPa.s | 6.0 | 6.5 | 6.0 | 6.0 | 7.2 |
| tensile strength (100 mm/min), mPa | 0.4 | 0.5 | 0.32 | 0.36 | 0.44 |
| deformation at break (100 mm/min.) % | 30 | 15 | 17 | 50 | 4 |
| solidification time, sec. | 7.5 | 6.5 | 5.1 | 4.5 | 4.5 |

TABLE C

| | 15 | 16 | 17 | 18 | 19 | 20 | 21 | 22 |
|---|---|---|---|---|---|---|---|---|
| acetylated monoglycerides/diglycerides of edible oils/fats with a degree of acetylation of 0.5-0.7 (Admul 2721®) | 75 | 60 | 55 | 70 | 55 | 70 | 80 | 60 |
| carnauba wax (wax from the leaves of the South American palm "Copernicia cerifera") | 10 | 5 | 5 | | | | | |
| monoglycerides/diglycerides of animal fatty acids (Radiamuls MG 2600®) | 15 | | | | | | | |
| lactic acid ester of monoglycerides/diglycerides of edible oils/fats (Admul 2033®) | | 35 | | | | | | |
| hardened vegetable fat (Prifat 9834®) | | | 40 | | | | | |
| stearic acid | | | | 25 | | | | |
| hardened castor oil (Radia 3200®) | | | | 5 | 5 | | 7.5 | |
| glyceryl monostearate | | | | | 40 | | | |
| sorbitan tristearate | | | | | | 20 | 12.5 | |
| Candelilla wax (wax originating from the succulents Euphorbiaceae and Pedilanthus, such as E.cerifera alcocer and E.antisyphylitica zuccarini and also P.pavonis Boissier and P.aphyllus Boissier) | | | | | | | 10 | |
| monoglycerides/diglycerides of vegetable oils/fats (Radiamuls MG 2603®) | | | | | | | | 30 |
| beeswax (wax produced by the insect species "Apis", e.g. the honeybee ("Apis mellifica") | | | | | | | | 10 |

TABLE C (CONTINUATION)

| | | | | | | | | |
|---|---|---|---|---|---|---|---|---|
| melting point (Mettler drop point), °C | 56.4 | 62.6 | 68.2 | 58.4 | 60.3 | 63.1 | 63.7 | 58.7 |
| penetration 25°C (ASTM D-1321) 0.1 mm | 39 | 33 | 27 | 38 | 50 | 30 | 28 | 31 |
| viscosity 100°C (Brookfield), mPa.s | 6.8 | 7.5 | 6.9 | 5.5 | 7.0 | 6.8 | 6.8 | 6.5 |
| tensile strength (100 mm/min), mPa | 0.55 | 0.75 | 0.52 | 0.45 | 0.60 | 0.51 | 0.5 | 0.8 |
| deformation at break (100 mm/min.) % | 40 | 26 | 21 | 140 | 5 | 8 | 35 | 15 |
| solidification time, sec. | 6.2 | 5.3 | 4.5 | 6.7 | 6.5 | 6.5 | 6.2 | 6.2 |

TABLE D

| | 23 | 24 | 25 | 26 | 27 | 28 |
|---|---|---|---|---|---|---|
| acetylated monoglycerides/diglycerides of edible oils/fats with a degree of acetylation of 0.5-0.7 (Admul 2721 ®) | 55 | 60 | 70 | 78 | 90 | 90 |
| glyceryl monostearate | 37.5 | | | | | |
| hardened castor oil (Radia 3200 ®) | 5 | | | | | 5 |
| carnauba wax (wax from the leaves of the South American palm "Copernicia cerifera") | | 5 | | | 5 | |
| Candelilla wax (wax originating from the succulents Euphorbiaceae and Pedilanthus, such as E.cerifera alcocer and E.antisyphylitica zuccarini and also P.pavonis Boissier and P.aphyllus Boissier) | | | 5 | | | |
| lactic acid ester of monoglycerides/diglycerides of edible oils/fats (Admul 2033 ®) | | 30 | | | | |
| citric acid ester of monoglycerides/diglycerides of edible oils/fats (Radiamuls CMG 2931 ®) | | | 20 | | | |
| pentaerythritol stearate | | | | 7.5 | | |
| sorbitan tristearate | | | | 12.5 | | |
| cellulose acetate butyrate (CAB 500-1 ®) | | 2.5 | 5 | | | |
| polyethylene wax (AC polyethylene wax no. 6 ®) | | | 5 | | | |
| ethylene/vinyl acetate copolymer (Elvax ®) | | | | 2 | 5 | 5 |
| melting point (Mettler drop point), °C | 61.5 | 67.2 | 78.5 | 68.7 | 64.0 | 62.0 |

TABLE D (CONTINUATION)

| | | | | | | |
|---|---|---|---|---|---|---|
| penetration 25°C (ASTM D-1321) 0.1 mm | 42 | 38 | 32 | 30 | 47 | 49 |
| viscosity 100°C (Brookfield), mPa.s | 19.6 | 40 | 10.1 | 7.5 | 12.5 | 13 |
| tensile strength (100 mm/min), mPa | 0.4 | 0.5 | 0.8 | 0.5 | 0.3 | 0.25 |
| deformation at break (100 mm/min.) % | 72 | 65 | 32 | 5 | 140 | 180 |
| solidification time, sec. | 6.1 | 5.3 | 4.4 | 5.4 | 5.5 | 6.0 |

Table A and Table B

Compositions 2-9 in Table A relate to binary mixtures, with which the aim at first was to lower the very high penetration value of composition 1 (constituent from group A exclusively) to a value which makes use on cheese possible. In compositions 2-9, the penetration value is reduced to the customary value of 25-50.

The melting points of compositions 2-9 are still on the low side. The disadvantage of this is that the coating on the cheese, which after immersion in or spraying with the preparation has a temperature of about 30-50°C, needs a long time to cool sufficiently with the formation of a layer which is not damaged during the subsequent operations (such as lifting with suction cups, by hand or using clamps). A higher melting point is needed in order to achieve this. This is the case with compositions 10 to 14 inclusive, a summary of which is given in Table B.

Table C

Compositions 15-22 are very suitable for use as the coating for cheese. As a result of the use of harder products melting at a higher temperature, such as carnauba wax, candelilla wax and hardened castor oil, both the hardness and the melting point of these formulations are adjusted to the desired value.

Table D

Plastics can be added to the abovementioned mixtures in order to improve the cohesion, the viscosity and the surface characteristics. The latter characteristics in particular are important to render the layer resistant to damage during the mechanical operations after applying the coating to the cheese. Compositions 23-28 give excellent coatings.

Tests for the determination of the drying-out inhibiting properties of coating preparations according to the invention and according to the prior art.

Two formulations A corresponding to B were tested for their barrier effect in comparison with a conventional cheese wax based on hydrocarbon waxes (Specerit natural R) and with cheese which has not been treated with a wax-like coating.

The results of these tests are summarized in table E.

For each of the tests 10 Edam cheeses (age 4 weeks) were used. The cheeses were brine-dry and on the age of 2 weeks conventionally treated with a plastic dispersion for inhibiting moulding.

After 4 weeks cheeses A, B, and C were coated by dipping them for 3 seconds into the coating preparation at the temperature indicated.

The cheeses were weighed before and after this treatment.

As a control group D 10 Edam cheeses were used, said cheeses not being provided with a cheese wax. These control cheeses were not hindered in their evaporation of water.

Subsequently, the cheeses were stored for 5 weeks at 13°C and a relative humidity of 65-75 %. The weight

loss was determined after 5 weeks by re-weighing the cheeses.

As appears from table E the weight loss of the coated cheeses A, B, and C is only a fractional part of that of the uncoated cheeses D. Furthermore, it appears that there is only a small difference between the conventional cheese wax C and the coating composition according to the invention.

TABLE E

| | A | B | C | D |
|---|---|---|---|---|
| Acytelated mono/diglycerides of edible oils/fats with a degree of acytelation of 0.5-0.7 (Radiamuls AMG 2021 ®) | 85 | 72 | | |
| Hardened castor oil (Opal wax ®) | 15 | 10 | | |
| mono/diglycerides of animal fatty acids (Radiamuls MG 2600 ®) | | 10 | | |
| mono/diglycerides of vegetable fatty acids (Radiamuls MG 2603 ®) | | 5 | | |
| Carnauba wax Prime Yellow | | 1.5 | | |
| Ethylene vinylacetate copolymer (Escorene 02514 ®) | | 1.5 | | |
| Specerit Natural ®) (cheese wax based on hydrocarbon waxes) | | | 100 | |
| Dip temperature | 80-90°C | 80-90°C | 95-100°C | - |
| Weight of the cheeses | 1800-1900 g | 1800-1900 g | 1800-1900 g | 1800-1900 g |
| Weight of applied coating composition | 28-34 g | 28-34 g | 24-27 g | - |
| Drying out after 5 weeks | av. 0.3% | av. 0.2% | av. 0.1% | av. 11.2% |

Comparison of the properties of coating preparations according to the invention and according to the prior art.

Table F shows a number of relevant properties of known cheese coatings and preparations according to the invention.

TABLE F

| Composition | Coating according to "Herstel-lungsbei-spiel" of De-A-2.411.058 | Specerit R 4326 (cheese wax based on hydrocarbon waxes | Coating acc. to the invention Table B No.13 | Table D No.27 |
|---|---|---|---|---|
| Analysis | | | | |
| Drop melting point (Mettler°C) | 53 | 56 | 74 | 64 |
| Penetration,25°C (ASTM D 1321) 0,1mm | 30 | 42 | 42 | 47 |
| Viscosity 100°C (Brookfield)mPa.s | 185 | 6.0 | 6.0 | 12.5 |
| Tensile strength (100 mm/min.) Pa | 0.55 | 0.48 | 0.36 | 0.30 |
| Deformation at break (100 mm/min) % | 93 | 43 | 50 | 140 |
| Solidification time sec. | ca. 25 | 5 | 4.5 | 5.5 |

As appears from table F the viscosity of the product according to DE-A-2,411,058 is very high (185 mPa.s). Although this prior art document might be used for coating sausages, it is absolutely unacceptable as coating for cheese (15-30 times too high). The solidification time is also very high (25 sec.). If such a coating would be used for cheese, very high coating quantities and unacceptable long drip and solidification times would be obtained.

## Claims

1. Method for coating cheese using a coating preparation comprising a mixture of a glyceride of a saturated fatty acid (A) with a wax or wax-like component (B) and, if appropriate, with further conventional components, **characterized in that** the glyceride of a saturated fatty acid is chosen from group A:

   A wax-like fatty acid glyceryl esters which are solid at room temperature, of the formula

$$\begin{array}{l} \;\;| \\ -C-O-R^1 \\ \;\;| \\ -C-O-R^2 \\ \;\;| \\ -C-O-R^3 \\ \;\;| \end{array}$$

wherein one or two of the groups $R^1$, $R^2$ and $R^3$ are radicals of aliphatic carboxylic acids having 1-6 carbon atoms,

and the other group(s) $R^1$, $R^2$ and/or $R^3$ is(are) a radical(s) of aliphatic saturated carboxylic acids having 14-22 carbon atoms;

and that the wax or wax-like component is chosen from group B:

B natural, i.e. vegetable and animal, waxes, synthetic ester waxes, fats, fatty acids, which may or may not be hydrogenated, which waxes or wax-like materials are not of mineral origin and have the following characteristics:

melting point (Mettler drop point): 60-110°C
penetration 25°C (ASTM D1321): 0-30
viscosity 100°C (Brookfield): 5-20 mPa.s

the melting point of the constituent from group B being higher than that of the constituent from group A.

**2.** Method according to Claim 1, in which the amount of the constituent from group A makes up 95-5 % by weight and the amount of the constituent from group B makes up 5-95 % by weight, based on the weight of the total composition.

**3.** Method according to Claim 1 or 2, in which the constituent from group B is an acetic acid, lactic acid or citric acid ester of a monoglyceride of palmitic acid or stearic acid, or mono- and diglycerides of vegetable and animal fatty acids.

**4.** Method according to one of the preceding claims, in which the constituent from group B is a wax of vegetable origin.

**5.** Method according to one of the preceding claims, in which a polymer material is also used in an amount of at most 20 % by weight, relative to the weight of the total composition.

**6.** Coated cheese obtainable by the method of one of the preceding claims.

## Patentansprüche

**1.** Verfahren zum Überziehen von Käse unter Verwendung einer Überzugspräparation, enthaltend ein Gemisch aus einem Glycerid einer gesättigten Fettsäure (A) mit einem Wachs oder einer wachsartigen Verbindung (B) und gegebenenfalls mit weiteren herkömmlichen Komponenten, dadurch gekennzeichnet, daß das Glycerid einer gesättigten Fettsäure aus der Gruppe (A) ausgewählt wird:

A wachsartige Fettsäure-Glycerylester, die bei Raumtemperatur fest sind, mit der Formel

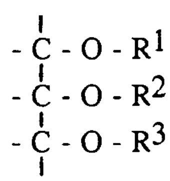

worin eine oder zwei der Gruppen $R^1$, $R^2$ und $R^3$ Radikale aliphatischer Carbonsäuren mit 1 - 6 Kohlenstoffatomen darstellen, und

die andere(n) Gruppe(n) $R^1$, $R^2$ und/oder $R^3$ ein Radikal (Radikale) aliphatischer gesättigter Carbonsäuren mit 14 - 22 Kohlenstoffatomen ist (sind);

und daß das Wachs oder die wachsartige Komponente aus der Gruppe B ausgewählt wird:

B natürliche, d.h. pflanzliche und tierische, Wachse, synthetische Esterwachse, Fette, Fettsäuren, die hydriert sein können oder nicht, wobei die Wachse oder wachsartigen Materialien keinen mineralischen Ursprung haben und die folgenden Eigenschaften aufweisen:

Schmelzpunkt (Mettler-Fallpunkt): 60-110 °C
Eindringtiefe 25 °C (ASTM D1321): 0-30
Viskosität 100 °C (Brookfield): 5-20 mPa·s

wobei der Schmelzpunkt des Bestandteils aus Gruppe B höher ist als der des Bestandteils aus Gruppe A.

2. Verfahren nach Anspruch 1, bei dem, bezogen auf das Gesamtgewicht der Masse, die Menge des Bestandteils aus Gruppe A 95 - 5 Gew.-% ausmacht und die Menge des Bestandteils aus Gruppe B 5 - 95 Gew.-% ausmacht.

3. Verfahren nach Anspruch 1 oder 2, bei dem der Bestandteil aus Gruppe B ein Essigsäure-, Milchsäure-, Citronensäureester von einem Monoglycerid der Palmitin- oder Stearinsäure oder von Mono- und Diglyceriden pflanzlicher und tierischer Fettsäuren ist.

4. Verfahren nach einem der vorgenannten Ansprüche, bei dem der Bestandteil aus Gruppe B ein Wachs pflanzlichen Ursprungs ist.

5. Verfahren nach einem der vorgenannten Ansprüche, bei dem ferner ein polymeres Material in einer Menge, relativ zu dem Gewicht der Gesamtmasse, von meistens 20 Gew.-% verwendet wird.

6. Überzogener Käse, der durch das Verfahren nach einem der vorgenannten Ansprüche zugänglich ist.

**Revendications**

1. Procédé d'enrobage de fromage en utilisant une préparation d'enrobage comprenant un mélange d'un glycéride d'acide gras saturé (A) avec un composant de cire ou d'une matière analogue à la cire (B) et, si cela s'avère approprié, avec d'autres composants classiques, caractérisé en ce que le glycéride d'acide gras saturé est choisi dans le groupe A :

   A. des glycéryl esters d'acides gras analogues à la cire qui sont solides à température ambiante et qui ont pour formule :

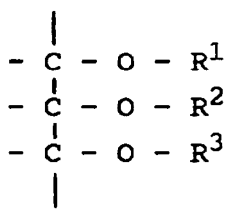

   dans laquelle un ou deux des groupes $R^1$, $R^2$, $R^3$ sont des radicaux d'acides caboxyliques aliphatiques ayant 1 à 6 atomes de carbone, et le ou les autres groupe(s) $R^1$, $R^2$ et/ou $R^3$ (est) sont un ou des radicaux d'acides carboxyliques aliphatiques saturés ayant 14 à 22 atomes de carbone,
   et le composant de cire ou d'une matière analogue à la cire est choisi dans le groupe B :
   B. des cires naturelles, c'est-à-dire végétales et animales, des cires d'esters synthétiques, des graisses, des acides gras, qui peuvent être ou non hydrogénés, ces cires ou ces matières analogues à la cire n'étant pas d'origine minérale et ayant les caractéristiques suivantes :
      point de fusion (point de goutte Mettler) : 60-110°C
      pénétration 25°C (ASTM D1321) : 0-30
      viscosité 100°C (Brookfield) : 5-20 mPa.s

   le point de fusion du constituant du groupe B étant supérieur à celui du constituant du groupe A.

2. Procédé selon la revendication 1, dans lequel la quantité de constituant du groupe A forme 95-5 % en poids et la quantité du constituant du groupe B forme 5-95 % en poids sur base du poids de la composition totale.

3. Procédé selon la revendication 1 ou 2, dans lequel le constituant du groupe B est un ester d'acide acétique, d'acide lactique ou d'acide citrique avec un monoglycéride d'acide palmitique ou d'acide stéarique, ou encore des mono- et diglycérides d'acides gras végétaux et animaux.

4. Procédé selon l'une quelconque des revendications précédentes, dans lequel le constituant du groupe B est une cire d'origine végétale.

5. Procédé selon l'une quelconque des revendications précédentes, dans lequel une matière polymère est également utilisée en quantité au maximum de 20 % en poids par rapport au poids de la composition totale.

6. Fromage enrobé susceptible d'être obtenu par le procédé de l'une quelconque des revendications précédentes.